# EUROPEAN PATENT APPLICATION

(11) **EP 1 724 694 A2**
(43) Date of publication of application: **22.11.2006**
(21) Application number: 06111673.7
(22) Date of filing: 24.03.2006
(51) Int. Cl.: G06F 17/30

(54) **A method to enhance query performance of search engines using lexical affinities**

(30) Priority: 10.05.2005 EP 05103880
(71) Applicant: International Business Machines Corporation, Armonk, N.Y. 10504 (US)
(72) Inventor: ALTEVOGT, Peter, 76275, Ettlingen (DE); FONTOURA, Marcus, Los Gatos, CA 95032 (US); WIEDRICH, Silvio, 09661, Striegistal (DE); ZIEN, Jason, Mountain View, CA 94043 (US)
(74) Representative: Klein, Hans-Jörg

(57) **Abstract**

The present invention relates to computer-based electronic Information Retrieval (IR). In particular, it relates to an electronic Information Retrieval (IR) method, wherein a predetermined search pool of documents (internet or others) is crawled, and documents thereof are indexed by a data structure for instance a so-called "inverted index", comprising an index composed of a potential search item and associated posting lists containing document identifying information, giving information, in which document said search item is found and further information on the location within a respective document where said search item occurs. In order to accelerate the query performance it is proposed to perform the following steps at indexing time:
a) generating an extended inverted index structure (32) comprising
aa) lexical affinity (LA) pairs (42), wherein each pair (42) is related to a particular lexical affinity between respective two search items, and
bb) a respective posting list (24) for each of said LA pairs, and
b) ranking searched documents by using said extended index (32).

## Description

### 1. BACKGROUND OF THE INVENTION

### 1.1. FIELD OF THE INVENTION

The present invention relates to computer-based electronic Information Retrieval (IR). In particular, it relates to an electronic Information Retrieval (IR) method and system, having an indexer module using an inverted index comprising potential search items and associated posting lists.

### 1.2. DESCRIPTION AND DISADVANTAGES OF PRIOR ART

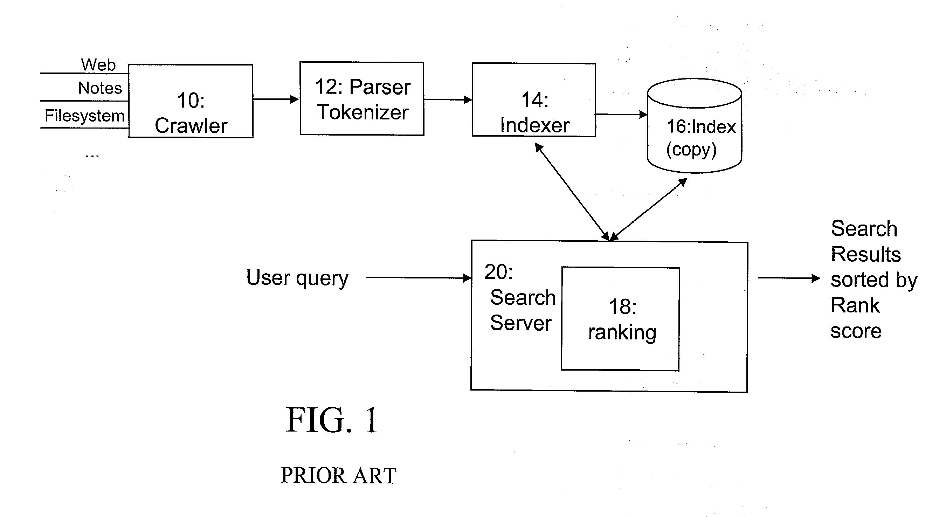

The basic structure and function of prior art IR systems is illustrated in figure 1.
The system includes amongst other elements with minor relevance for the present invention a search engine comprising a web crawler module 10, a parser or tokenizer module 12, an indexer module 14, an index storage 16 storing data according to a logical scheme comprising search items as mentioned above; the system further includes a ranking module 18, a search module 20, and finally a client which issues queries and receives results from the IR system.

In particular, a search pool of documents (Internet or others) is crawled independently of user queries, and crawled documents are indexed by a data structure, for instance the before-mentioned "inverted index", comprising in each row an index entry composed of a potential search item and an associated posting list containing document-identifying information, saying in which document a search item is found and including optionally further information on the location within a respective document, where said search item occurs. The search server 20 accesses a copy of the index 16, see the arrow.

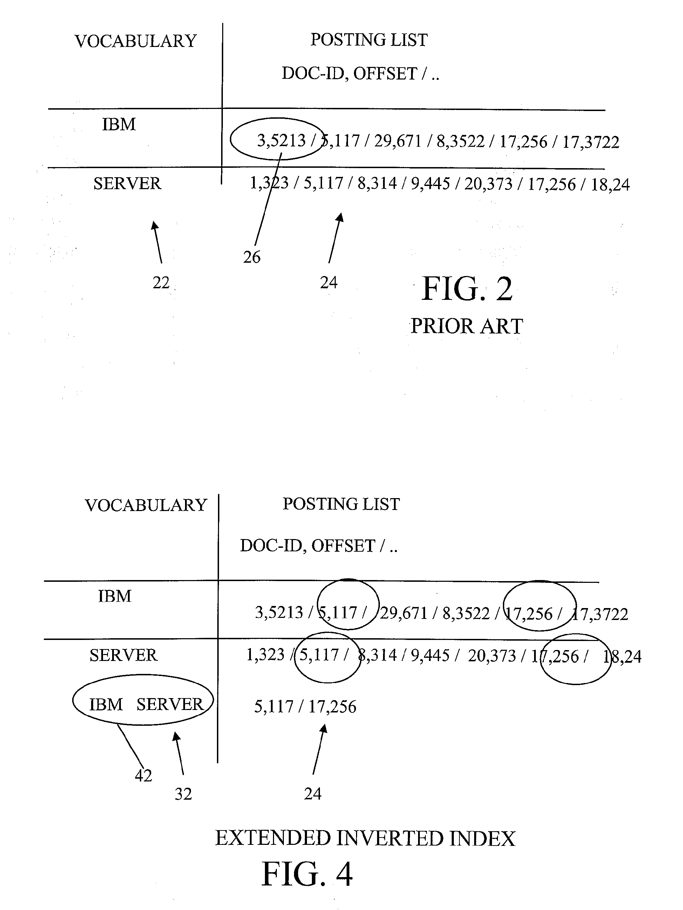

Figure 2 depicts a "sectional" view on two single entries within the before-mentioned inverted index data structure. The left column defines the so-called vocabulary and comprises possible search items 22 like for example "IBM", or "SERVER". The right column is known as posting list 24. A posting list entry 26 for a search item includes:
a) a document-identifying information, for example a number, or URL and optionally further information like
b) an offset from the beginning of a respective document.

For "IBM" for example the first entry in the posting list relates to document ID 0003, page 52 thereof and line 13 thereof. The other references and entries in the posting list depicted in figure 2 are to be interpreted similarly.

With respect to the particular focus of the present invention, a general issue of prior art Information Retrieval (IR) systems as mentioned above is the size of their data structures, e.g. the dictionary or "vocabulary" entries, i.e., the left column in figure 2. When data items thereof are too big, the system suffers the drawback of low data cache hit rate and high I/O traffic between the system memory and the CPU forming a well known performance bottleneck. In worst case, the third stage forming part of an even longer and narrower bottleneck is consequently disk input and output (I/O), since count and size of data items can exceed the available hardware-sided memory.
IR systems and search engines are used to compute a very large number of particular data items like dictionary entries, posting list entries and statistical information related thereto. So, with increasing use of this bottleneck during the query execution as depicted in figure 1 the performance thereof slows down intolerably.

So, basically every approach of shifting resource consumption from the memory and IO subsystems to the CPU, to avoid intensive bottleneck usage is welcome in general, since CPU speed is increasing at a higher rate than the memory or I/O subsystem bandwidth. One such prior art approach includes the general idea to reduce disk I/O by the compression of the data items in memory before they are written to disk, see I.H. Witten, A. Moffat, T.C. Bell: Managing Gigabytes: Compressing and Indexing Documents and Images, Second Edition, Morgan Kaufmann, Inc. 1999.

But this approach suffers from the drawback that the data must be read back to memory for decompression. This requires additional memory and CPU cycles. This offsets at least partially the savings of disk I/O. Thus, actually this is not a satisfying solution for the bottle-neck problem described above.

### 1.3. OBJECTIVES OF THE INVENTION

It is thus an objective of the present invention to alleviate the before-mentioned disadvantages of prior art.

### 2. SUMMARY AND ADVANTAGES OF THE INVENTION

This objective of the invention is achieved by the features stated in enclosed independent claims. Further advantageous arrangements and embodiments of the invention are set forth in the respective subclaims. Reference should now be made to the appended claims.

The term "search pool" of information sources is intended include for example actual plain text documents, but also existing query logs, and "anchor stores" of a document comprising links to the document as they comprise often short and concise content information.
The following characterizing steps of the invention are performed at indexing time:
a) generating an extended inverted index structure comprising aa) lexical affinity (LA) pairs, wherein each pair is related to a particular lexical affinity between respective two search items, and
bb) a respective posting list for each of said LA pairs, and

### b) ranking searched documents by using said extended index.

A lexical affinity (LA) represents the correlation of words co-occurring in a document, and is identified by looking at a number of words found in close proximity, for example in a 3-word window, a 4-word- or 5-word, or up to a 10-word window, to each other; for simplicity we limit ourselves here to pairs of words or search items, respectively. The window size is basically subjectable for free selection.

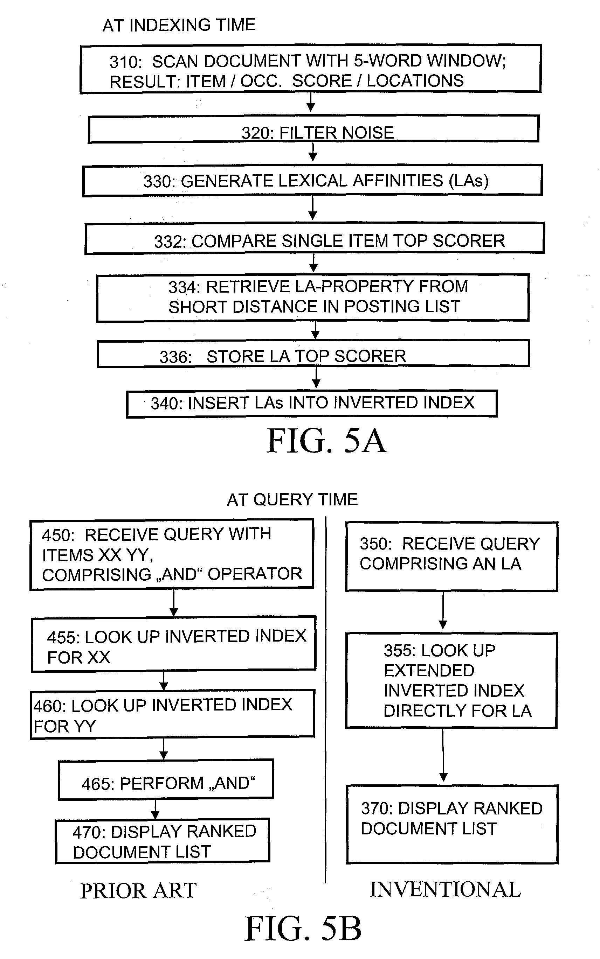

LAs are identified after prior art noise filtering, preferably by counting the occurrence of textual items preferably having substantial significance in a respective semantic area. The basic prior art approach capable to identify content-relevant single-word search items is thus extended by extending the search items from single-word occurrences to multiple-word, preferable two-word occurrences. For example, "IBM" is a single search item, and "Server" is another single search item. Prior art methods provide for counting the occurrences of either item in a text.
In a further step of the inventional method the degree of relevance is defined based on a counting of the number of occurrences of this pair in the document. If quite relevant, what is able to be individually set, and as it is assessed by prior art methods, a loose coupled pair of single search items (LA pair) is directly included as a separate entry into the vocabulary, see the left column of figure 2 (prior art), or of figure 4 (inventional).

With respect to the bottleneck problem mentioned above, the use of LA pairs reduces the uses of the bottleneck significantly, as the entire LA pair is in general residing in memory during query time, and only a minor number of disk I/O processes and minor CPU usage is required for retrieving the posting list of the LA pair from hard disk. A detailed example is given later below.

In the inventional method the textual environment of significant search items is further analyzed, preferred in forward and/or backward direction by sliding a scan window through the document. The size of this window can be varied. For example five subsequent words can define a text scan window. During this document scan procedure significant word pairs are identified, which stand repeatedly in a narrow - e.g. five words only - textual distance and thus form a certain "Lexical Affinity", as they describe a semantic context.

This may be used to improve the ranking of the query results so that the more loosely coupled occurrences of search items are included in the result list due to a higher rank score. This is in contrast to prior art methods, which just offer the option of defining a literal text string "XX YY" or the option to search separately for "XX" and then for "YY". When, however, a text string occurs like "XX ZZ YY", thus XX and YY are separated by some characters or some words, then no hit is found in prior art. ZZ can easily be defined over a whole range of "textual distances" from a single character to a couple of words, for instance to 3 words, or 5 words or even 10 words, or any number in-between. Also larger distances can be used, but the longer the distance is the more computing resources must be spent during indexing time.

An instructive example for a Lexical Affinity (LA) pair is:
-IBM SERVER-
as there are plenty of servers offered by IBM, for instance a mail server, a file server, a backup server,, etc. As in many texts, further attributes are added, often in for of an descriptive adjective, like for instance "high-performance" or "high-end" or some product type is interposed like "IBM zseries Server", etc., all those occurrences are found by the inventional method.

Another example is:
-CARNIVAL RIO-
Typical occurrences found by that may look like: "carnival in Rio", or "carnival parties in and around RIO", "carnival high-life in beautiful Rio" etc..

As a skilled reader may understand this is a major performance and quality gain during search time, as such LA pairs, are able to be ranked relatively high.
Further, these inventional steps enhance the ranking procedure. Thus, higher quality ranking results are provided.

A preferred optional feature of the present invention relates to the process of counting these occurrences. In particular, the prior art method of "Probabilistic Counting" (PC) is applied to the counting of the before-mentioned Lexical Affinities, i.e., the entries 42 in figure 4 during indexing. This feature allows in this specific use the computing of large numbers within a very small memory region, which are approximately similar to the actual counting result. This increases the probability of cache hits and avoids memory accesses just needed for increasing a counter value, which accelerates the indexing procedure significantly, as the counting, how often a certain term occurs in a given document is a central issue during indexing.

In a second general aspect this invention describes a method to approximately compute statistical data by exploiting probabilistic computations reducing the resource demand concerning memory and disk I/O bandwidth. A direct application of this invention is the counting of term correlations (Lexical Affinities) for ranking.

### 3. BRIEF DESCRIPTION OF THE DRAWINGS

The present invention is illustrated by way of example and is not limited by the shape of the figures of the drawings in which:
Figure 1 is a schematic diagram illustrating a prior art information retrieval system;
Figure 2 is a schematic illustration of a prior art inverted index data structure section used during the search procedure of prior art IR systems.
Figure 3 is a schematic diagram illustrating a system improved by the present invention;
Figure 4 is a schematic illustration according to figure 2, improved by an extended, inverted index according to a specific embodiment of the present invention,
Figure 5A is a schematic control flow diagram illustrating the control flow of steps performed during indexing time according to this specific embodiment,
Figure 5B shows the control flow during query time,
Figure 6 shows in a table representation the counter values obtained by probabilistic counting with respective probability values for incrementing the counter,
Figure 7 is a table representation comparing the original counting N in the left column at some specific values and covering a quite large range and respective new values of the counter C obtained by applying the probabilistic counting, and
Figure 8 is a graphical representation "original counting vs. approximate counting".

### 4. DETAILED DESCRIPTION OF THE PREFERRED EMBODIMENT

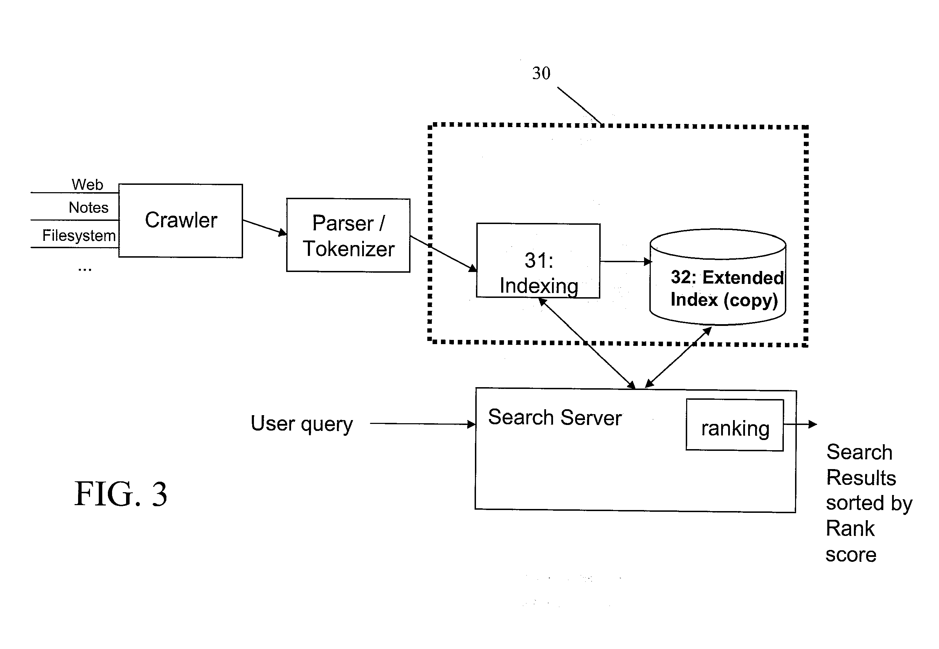

With general reference to the figures and with special reference now to figure 3 where rectangle 30 is shown which defines the system location for the implementation of the inventional method. Indexer 31 uses the method as claimed herein. The extended inverted index 32 obtained by indexer 31 is also used later in the query procedure.

In figure 4 a new entry provided by the present invention is denoted with reference sign 42. The content thereof is "IBM SERVER". The associated exemplary posting list comprises a first posting mentioning document ID 5, offset 117 and a further second document ID 17, offset 256. A comparison to the entries of "IBM" and that of "SERVER" shows that their posting lists are much longer. This results from more occurrences of each respective single term.

With further reference now to figure 5A the control flow of the inventional embodiment during indexing time comprises a loop which is run through for each searched document. In this loop a first step 310 exists, in which the current document is scanned through with a 5-word window resulting in a word statistic comprising a plurality of words, i.e. search items with a respective score representing the absolute number of occurrences of an item within the scanned document, and a respective list of locations for each occurrence.

For example in a scan window comprising a fist word and subsequent four words only in forward direction the occurrences of the 2-tuples of "IBM" "SERVER" is counted in the scan procedure.
Hypothetic sample occurrences comprising "IBM" as a potential search item are depicted as follows:
A) "IBM SERVER solutions are best rated...";
B) "IBM mail SERVER was operated ...";
C) "IBM's sales statistics on SERVERs ... ", etc.

All of them are found in the scan step 310. A score is incremented for each new occurrence of the Lexical Affinity "IBM ... SERVER", and the location thereof in the document is stored for each occurrence in the posting list.

Each occurrence is counted only once for that score, as in a "moving" exemplary 5-word scan window, further occurrences exist, which include the text region preceding the sample text A), for example:
A part of the plain text section is:
"Over a time period of the last ten years IBM SERVER solutions are best rated." Then, the following four occurrences are found and counted as a single hit:
1: last ten years IBM SERVER
2: ten years IBM SERVER solutions are
3: years IBM SERVER solutions
4: IBM SERVER solutions are best

Next, in a step 320 the so-called noise is filtered according to prior art filter mechanisms in order to avoid that non-significant words like "is", "and", "are", "have", etc. do not form part of the inventional extended index.

In a further step 330 the lexical affinities (LA) are generated. This is preferentially done as follows: in a first step 332 the single item top scorers are combined with each other. For example a document has a number of 10 content-significant single search items. Then the most top scorer item is sequentially combined with each respective subsequent single item from the top scorer list. In a second step 334 the document locations for each of both compared single items is compared. If for example the same document ID and an approximately identical offset is found, then the compared item pair can be found in the same line in the document and a close relationship can be stated. Thus, an occurrence counter for the pair is increased by 1. The method is continued until all locations of the search item pair have been processed. Then the number of total pair occurrences (LA occurrences) is stored along with each common location of the pair in the document. This procedure is continued for the next pair from the single item top scorer list.

Assume a case, in which the single items with the highest score are the following:

### IBM, ENVIRONMENT, SERVER, APPLICATION, INTEGRATED

At the end of step 336, when the lexical affinities according to the present invention have been determined, a top scorer lexical affinity list is created which could look as follows:

### IBM ENVIRONMENT 190 OCCURRENCES, LOCATIONS: 4, 12; 6, 24; ...

### IBM SERVER 180 OCCURRENCES, LOCATIONS: .......

### IBM APPLICATION 160 OCCURRENCES, LOCATIONS: ........

### IBM INTEGRATED 120 OCCURRENCES, LOCATIONS: ..........

In a case, in which a number of 10 highest score single items are processed as described above the loop consisting of steps 332, 334 and 336 must be run (10 * 9) : 2 = 45 times. (in general N) * (N-1) : 2.

It is admitted that this additional work means some additional computing required at indexing time. Then, finally in a step 340 the top most lexical affinities are inserted into the inverted index structure as it is depicted with entry 42 in figure 4 in an exemplary form.

The advantage resulting from this inventional method is visible at query time, which is illustrated in figure 5B. Figure 5B in his left part shows the prior art procedure including multiple usage of the bottleneck mentioned in the introductory chapter between CPU and memory and between memory and hard disk. At the right portion of figure 5B the inventional method is presented:
at first glance the inventional method has less steps and uses this bottleneck much less than prior art.
According to the inventive embodiment only steps 350, 355 and 370 are performed. In particular in step 350 the information retrieval system receives a query comprising a lexical affinity (LA) as described before, for example "IBM ... SERVER". The information system implementing the inventional method resolves the LA item and looks up in a step 355 the extended inverted index provided by the present invention directly for the queried LA. In case the LA is found, the ranked posting list is then displayed to the user in a step 370. Step 355 implies a small number of disc I/O accesses in order to retrieve the posting list.

In comparison to that, figure 5B left portion shows what is done in prior art:
In step 450 a query is received comprising two different single items XX and YY and an AND operator which expresses that only documents should be result candidates which comprise both item XX and item YY. XX may be the item "IBM" and YY may be the item "SERVER".

Then in a next step 455 the inverted index structure shown in figure 2 is looked up for item XX. If found what is assumed in order to being able to compare the inventional method to the prior art method, the posting list for XX will be read from disk. As the comparison in figure 4 shows, the posting list for XX will be in general case quite long compared to the posting list of an LA comprising XX and YY. Thus, in step 455, generally a much higher number of disk I/O accesses will be performed.

Then, in a step 460 the same is repeated for the item YY. Again a relatively high number of disk I/O accesses has to be expected.

Then in a further step 465 the AND operation will be performed in order to find out which subset of searched documents comprises both, search item XX and search item YY. When the posting lists are completely loaded from disk into memory then this step requires only "INCREASED CPU PROCESSING". This processing is also significant when compared to the small extend of processing which is required according to the invention. In rare cases where the posting list is too large for being stored completely in memory, then further disk I/O accesses are required for performing the logical AND operation.

Finally, in step 470 the ranked document list is also displayed to the user.

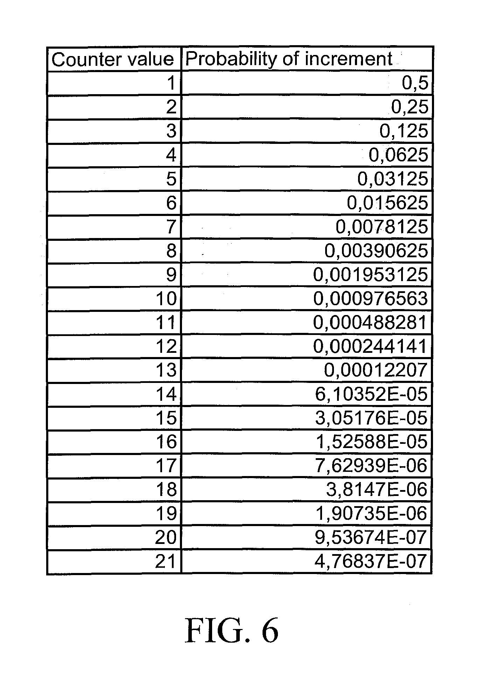

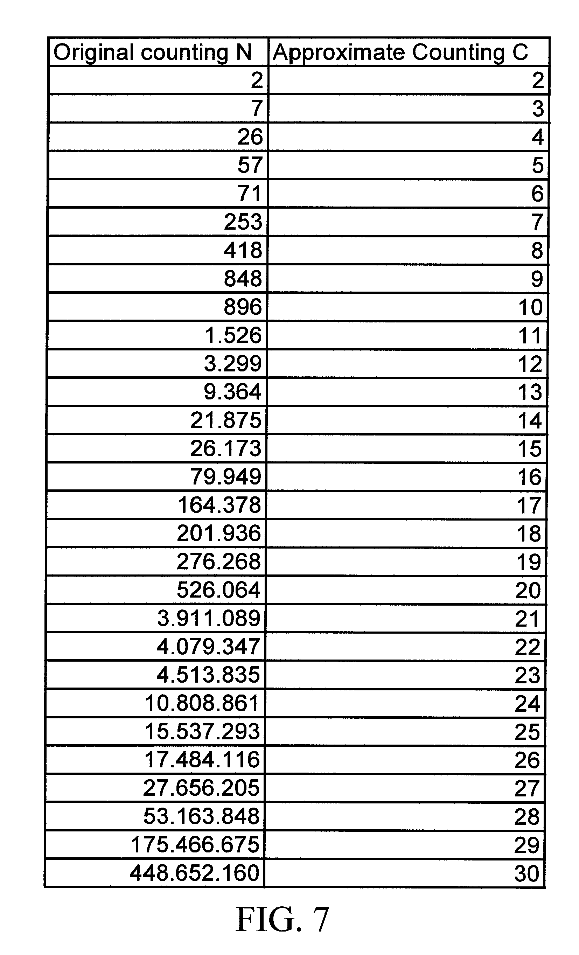

Next, the advantageous use of Probabilistic Counting (PC) will be further explained next below with further reference to figures 6, 7 and 8.

As an exemplary use for the exploitation of Probabilistic Counting the computation of ranking of Lexical Affinities (LA) is disclosed in here. As already defined above, LAs are two-term correlations of words which co-occur within a specified distance, for instance five words. LA ranking can be computed by several statistical methods, which require the number of the term correlation as well as the number of each term a LA is comprised of.

Since the number of term correlations in huge text corpora maybe very large, a large number of LA data items is identified in such cases, for instance up to several millions for more than 100,000 documents. Such a high amount of items can use an excessive amount of memory. Therefore it is mandatory to use a data type for counting that is able to efficiently store such a large number. Usually this data type is a 32 (64) bit unsigned integer type. The counting works in its easiest manner by incrementing the value by one, each time e.g. the LA occurs within a text corpus.

The Probabilistic Counting uses data types of much smaller size for counting:
According to the present invention Probabilistic Counting can be used as a way to count large numbers 1...N using only log₂log₂N bits instead of log₂N bits. This fact allows to count 32 bit integer values using only 5 bits. An exemplary implementation of the probabilistic counting is described below in C programming language:

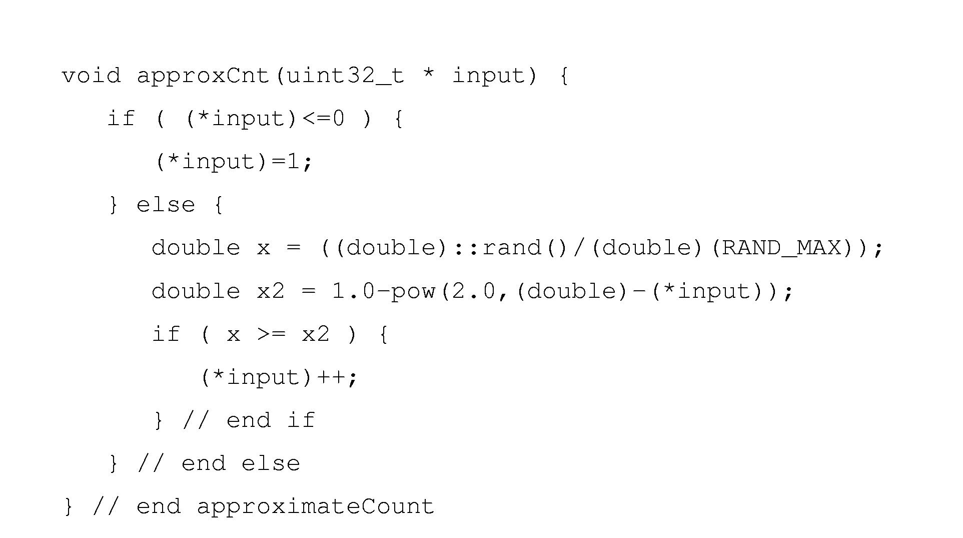

The respective pseudo code algorithm steps are as follows:
*A) Start with a counter C, which is initiated with 1*
*B) Use a pseudo random number generator to generate a floating point number x between 0...1*
*C) Compare the generated number with the result of 1.0-(2*^{*-C*}*) (=x2)*
*If x2 is smaller or equal than x, we increment C by 1, otherwise leave the counter at its old value*

As it can be seen from figure 6, the probabilistic counting algorithm increments its value with a probability that depends only on the number stored in its input value. The higher the number becomes, the lower will be the probability, that this value will be incremented. The table in figure 6 shows this probability of incrementation.

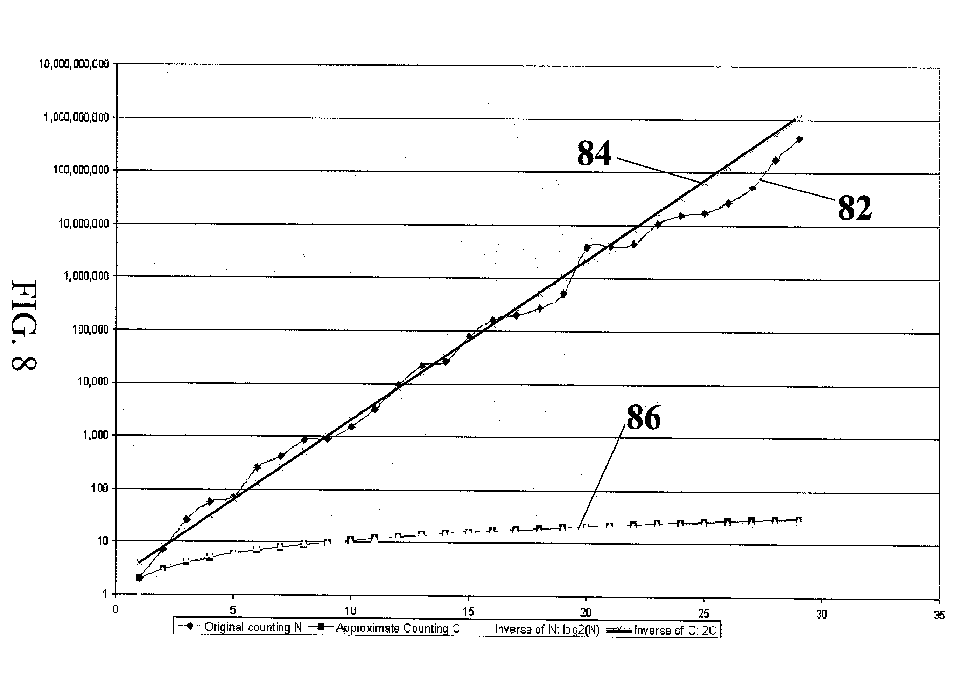

The following aspects should be noted when using the method of Probabilistic Counting in Information Retrieval Systems:
The primary question of using probabilistic counting is, how representative these counter values are. This question is answered in figure 8. Curve 86 shows the probabilistic Counter, which is increased only very slowly, when the original counter is increased. The curve 84 represents the original count, whereas curve 82 is the inverse of the probabilistic counter value that can be used to retrieve the real number. The graphical representation of the differences between lines 82 and 84 shows clearly, that the error imported into a calculation fluctuates around the true value but remains quite limited. Besides the original counter 84 and the probabilistic Counter, figure 8 shows the inversion of the Probabilistic Counter value 82 to retrieve an approximation to the real counter as well as the inversion of the real counter.
The inventional use of the Probabilistic Counting has mainly two advantages:
First it enables for operating with smaller data structures. The use of smaller data structures results in a higher cache hit rate. When counting LAs using Probabilistic Counting the size of the data fields for counting can be reduced to one byte to count up to 2²⁵⁶ items.

The second advantage is the decrease of the probability of incrementing the count. A result of this advantage is that the need to retrieve the LA data items per memory I/O for count manipulation will decrease, too. An even higher impact of this disk I/O saving can be recognized if it is necessary to write back the data items to memory, because each time the Probabilistic Counting decides that an increment is not necessary, the data items are left "untouched". This probability increases with every former increment of the value. The algorithm disclosed shortly above, will be of logarithmic complexity of processing the counter, while real counting may be assumed to be done usually in linear time.

The present invention can be realized in hardware, software, or a combination of hardware and software. An Information Retrieval tool according to the present invention can be realized in a centralized fashion in one computer system, or in a distributed fashion where different elements are spread across several interconnected computer systems. Any kind of computer system or other apparatus adapted for carrying out the methods described herein is suited. A typical combination of hardware and software could be a general purpose computer system with a computer program that, when being loaded and executed, controls the computer system such that it carries out the methods described herein.

The present invention can also be embedded in a computer program product, which comprises all the features enabling the implementation of the methods described herein, and which - when loaded in a computer system - is able to carry out these methods.

Computer program means or computer program in the present context mean any expression, in any language, code or notation, of a set of instructions intended to cause a system having an information processing capability to perform a particular function either directly or after either or both of the following
a) conversion to another language, code or notation;
b) reproduction in a different material form.

## Claims

1. An electronic Information Retrieval (IR) method, wherein a predetermined pool of information sources is crawled, and documents thereof are indexed by a data structure comprising an index composed of a potential search item and an associated posting list containing document identifying information on documents containing the search item and further information on the location within a respective document where said search item occurs,
which method is **characterized by** the following steps, performed at indexing time:
a) generating (310, 330, 340) an extended inverted index (32) structure comprising
aa) lexical affinities (42)(LA), wherein each lexical affinity (42) is related to respective two search items (22), and
bb) a respective posting list (24) for each of said lexical affinities (42),
b) ranking (350, 355, 370) searched documents by using said extended index (32).

2. The method according to claim 1, wherein query logs are used as information sources.

3. The method according to claim 1, wherein anchor stores are used as information sources.

4. The method according to claim 1, wherein the method of Probabilistic Counting is applied for counting the occurrences of lexical affinities (42) in said pool of documents at indexing time.

5. An electronic Information Retrieval (IR) method, wherein a predetermined pool of documents (Internet or others) is crawled, and documents thereof are indexed by a data structure comprising an index composed of a potential search item (22) and associated posting lists (24) containing document identifying information, and further information on the location within a respective document, where said search item (22) occurs, **characterized by** the use of the method of probabilistic Counting (PC) for counting the occurrences of lexical affinities (42) (LA) in documents during indexing time.

6. A method for computing statistical data in Information Retrieval systems **characterized by** using probabilistic counting (PC) for mathematical expressions, which are calculated based on stochastic input variables.

7. A computer system in a search environment wherein a predetermined pool of information sources is crawled, and documents thereof are indexed by a data structure comprising an index composed of a potential search item (22) and an associated posting list (24) containing document identifying information on documents containing the search item (22) and further information on the location within a respective document where said search item occurs, **characterized by**
having a storage means storing
an extended inverted index (32), wherein said index (32) stores lexical affinities (42)(LA), wherein each lexical affinity (42) is related to respective two or more search items (22), and
a respective posting list (24) for each of said lexical affinity (42) .

8. A computer program for performing an electronic Information Retrieval (IR) method, wherein a predetermined pool of information sources is crawled, and documents thereof are indexed by a data structure comprising an index composed of a potential search item (22) and an associated posting list (24) containing document identifying information on documents containing the search item and further information on the location within a respective document where said search item occurs,
**characterized by** functional components for
a) generating (310, 330, 340) an extended inverted index (32) structure comprising
aa) lexical affinities (42)(LA), wherein each lexical affinity (42) is related to respective two or more search items (22), and
bb) a respective posting list (24) for each of said lexical affinity (42),
b) ranking (350, 355, 370) searched documents by using said extended index (32).

9. A computer program product stored on a computer usable medium comprising computer readable program means for causing a computer to perform the method of anyone of the claims 1 to 6,
when said computer program product is executed on a computer.
